# EUROPEAN PATENT APPLICATION

(11) **EP 3 757 782 A1**
(43) Date of publication of application: **30.12.2020**
(21) Application number: 20158208.7
(22) Date of filing: 19.02.2020
(51) Int. Cl.: G06F 9/455, G06F 13/16, G06F 12/10

(54) **DATA ACCESSING METHOD AND APPARATUS, DEVICE AND MEDIUM**

(30) Priority: 26.06.2019 CN 201910560713
(71) Applicant: BEIJING BAIDU NETCOM SCIENCE AND TECHNOLOGY CO. LTD., 100085 Beijing (CN)
(72) Inventor: LENG, Xianglun, Beijing, 100085 (CN); ZHAO, Zhibiao, Beijing, 100085 (CN); HAN, Jincheng, Beijing, 100085 (CN); QI, Wei, Beijing, 100085 (CN)
(74) Representative: advotec.

(57) **Abstract**

Embodiments of the present disclosure provide a data accessing method and apparatus, a device, and a computer-readable storage medium, and relate to a computer field. The data accessing method includes: obtaining (202) an identification of a virtual function corresponding to a virtual machine of a computing device and an address related to data in a memory to be accessed by the virtual machine, in which the identification of the virtual function and the address are determined based on an access request received from the virtual machine of the computing device; determining (204) a range of storage resource in the memory corresponding to the virtual machine based on the identification; determining (206) whether the address is within the range; and in response to determining that the address is within the range, accessing (208) the data related to the address.

## Description

### TECHNICAL FIELD

The present disclosure mainly relates to a computer field, and more particularly, to a data accessing method and apparatus, a device and a medium.

### BACKGROUND

With the rapid development of cloud computing, modern data centers generally use virtualization technology to improve the utilization of physical resources of servers. The separation of software from hardware in the virtual machine allows for better operations such as software management, fault detection, and system maintenance. Virtualization technology enables one physical server to run a plurality of virtual servers, thereby improving utilization of the server and greatly reducing cloud computing deployment costs.

Artificial intelligence (AI) computing is widely used in cloud computing, and various graphics processing units (GPUs) or AI accelerator cards are naturally deployed in large numbers. Through single-root I/O virtualization (SR-IOV) technology, these accelerator cards can quickly support virtualization. However, there are many issues that need to be addressed in the process of using accelerator cards to support virtual machines.

### SUMMARY

Example embodiments of the present disclosure provide solutions for accessing data.

In a first aspect, embodiments of the present disclosure provide a data accessing method. The method includes: obtaining an identification of a virtual function corresponding to a virtual machine of a computing device and an address related to data in a memory to be accessed by the virtual machine, in which the identification of the virtual function and the address are determined based on an access request received from the virtual machine of the computing device; determining a range of storage resource in the memory corresponding to the virtual machine based on the identification; determining whether the address is within the range; and in response to determining that the address is within the range, accessing the data related to the address.

In an embodiment, the method also includes: in response to determining that the address is not within the range, returning an error message.

In an embodiment, the error message indicates a decoding error.

In an embodiment, accessing the data related to the address may include: determining a starting physical address of the storage resource based on the identification; determining a physical storage address corresponding to the address based on the starting physical address and the address; and accessing the data corresponding to the physical storage address.

In an embodiment, the method also includes: in response to receiving a request for setting a mapping relation between the identification and the range of the storage resource transmitted through a physical function, storing the mapping relation in a register related to the memory.

In an embodiment, the method is implemented on a system-on-a-chip (SoC) communicatively coupled with the computing device.

In a second aspect, embodiments of the present disclosure provide a data accessing apparatus. The data accessing apparatus includes: an obtaining module, configured to obtain an identification of a virtual function corresponding to a virtual machine of a computing device and an address related to data in a memory to be accessed by the virtual machine, wherein the identification of the virtual function and the address are determined based on an access request from the virtual machine of the computing device; a range determining module, configured to determine a range of storage resource in the memory corresponding to the virtual machine based on the identification; an address comparison module, configured to determine whether the address is within the range; and a first access module, configured to access the data related to the address in response to determining that the address is within the range.

In an embodiment, the apparatus also includes: a returning module, configured to return an error message in response to determining that the address is not within the range.

In an embodiment, the error message indicates a decoding error.

In an embodiment, the first access module may include: a starting physical address determining module, configured to determine a starting physical address of the storage resource based on the identification; a physical storage address determining module, configured to determine a physical storage address corresponding to the address based on the starting physical address and the address; and a second access module, configured to access the data corresponding to the physical storage address.

In an embodiment, the apparatus may include a storage module, configured to store the mapping relation in a register related to the memory in response to receiving a request for setting a mapping relation between the identification and the range of storage resource transmitted through a physical function.

In an embodiment, the apparatus is on a system-on-a-chip (SoC) communicatively coupled with the computing device.

In a third aspect, embodiments of the present disclosure provide an electronic device. The electronic device includes: one or more processors; and a storage device for storing one or more programs, when the one or more programs are executed by the one or more processors, the one or more processors are caused to implement the method according to the present disclosure of the first aspect.

In a fourth aspect, embodiments of the present disclosure provide a computer-readable storage medium having a computer program stored thereon that, when executed by a processor, the method according to the present disclosure of the first aspect is implemented.

It should be understood that what is described in the Summary section is not intended to limit key or important features of the embodiments of the present disclosure, nor is it intended to limit the scope of the present disclosure. Additional features of the present disclosure will become readily understood from the following description.

### BRIEF DESCRIPTION OF THE DRAWINGS

The above and/or additional aspects and advantages of embodiments of the present disclosure will become apparent and more readily appreciated from the following descriptions made with reference to the drawings, the same or similar reference numerals indicate the same or similar elements in the drawings, in which:
FIG. 1 is a schematic diagram of an example environment 100 for accessing data according to an embodiment of the present disclosure.
FIG. 2 is a flowchart of a data accessing method 200 according to an embodiment of the present disclosure.
FIG. 3 is a flowchart of a data accessing method 300 according to an embodiment of the present disclosure.
FIG. 4 is a schematic diagram of an example environment 400 for processing data according to an embodiment of the present disclosure.
FIG. 5 is a block diagram of a data accessing apparatus 500 according to an embodiment of the present disclosure.
FIG. 6 is a block diagram of a computing device 600 capable of implementing various embodiments of the present disclosure.

### DETAILED DESCRIPTION

Embodiments of the present disclosure are described in more detail below with reference to the accompanying drawings. Although the drawings include certain embodiments of the present disclosure, it should be understood that the present disclosure may be implemented in various forms and should not be construed as limited to the embodiments set forth herein, but rather these embodiments are provided for a more thorough and complete understanding of the present disclosure. It should be understood that the drawings and embodiments of the present disclosure are for exemplary purposes only, and are not intended to limit the protection scope of the present disclosure.

In the description of the embodiments of the present disclosure, the term "comprising" and similar terms should be understood inclusively as "comprising but not limited to". The term "based on" should be understood as "based at least in part on". The term "one embodiment" or "the embodiment" should be understood as "at least one embodiment". The terms "first", "second" and the like may refer to different or the same object. Additional explicit and implicit definitions may be described below.

Currently, the usage of a system-on-a-chip (SoC), such as GPUs or AI accelerator cards to effectively support virtualization face great challenges. The system-on-a-chip generally uses a memory management unit to support the virtualization of the memory on the system-on-a-chip. However, when the memory management unit is configured to realize the virtualization of the memory on the SoC, as there are a plurality of computing units on the SoC, a plurality of memory management unit modules need to be instantiated on the chip. At this time, the above method not only requires a large amount of hardware resources, but also a plurality of sets of page tables and related consensus operations that need to be maintained by the software, leading to large overhead.

Embodiments of the present disclosure provide improved data accessing solutions. In these solution, an identification related to a virtual machine and a logical address related to data to be accessed associated with an access request received from a virtual machine of a computing device are determined. Then, based on the identification, a range of storage resources in the memory on the SoC corresponding to the virtual machine is determined. When the address is within the range, data related to the address is accessed through address translation. The memory management unit disposed on the SoC converts the memory addresses from different virtual machines into the physical addresses that are actually accessed, without setting memory management units and related page tables for each computing unit, such that it is possible to achieve memory access with less hardware resources and realize small software overhead, thus the requirements on virtualization of a SoC in cloud computing can be satisfied.

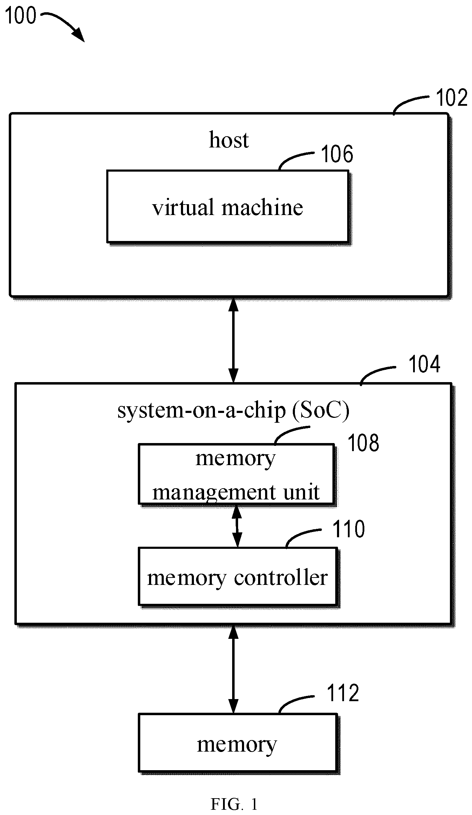

FIG. 1 is a schematic diagram of an example environment 100 for accessing data according to an embodiment of the present disclosure. As illustrated in FIG. 1, the environment 100 includes a host 102 and a system-on-a-chip (SoC) 104. The host 102 may be various types of computing devices capable of running a virtual machine 106. Example computing devices include but are not limited to personal computers, server computers, handheld or laptop devices, mobile devices (such as mobile phones, personal digital assistants (PDAs), and media players), multiprocessor systems, consumer electronics, small computers, large computers, distributed computing environment including any of the above systems or devices, and the like.

In some embodiments, the host 102 supports a PCIe function. Alternatively, or additionally, the host 102 also supports I/O devices through single-root I/O virtualization (SR-IOV) to improve the utilization of the I/O devices, such as network interfaces.

The virtual machine 106 runs on the host 102. The virtual machine 106 refers to an application execution environment created by a specific application program on a hardware platform of a physical machine, and a user can run the application in the environment and interact with the environment as if using a physical machine. When creating the virtual machine 106, it is usually necessary to allocate a certain amount of resources from the host 102 hosting the virtual machine 106 through a manager, for the virtual machine 106 to use in operations. The resource may be any available resource for running the virtual machine 106, such as a computing resource (such as a CPU, a GPU, and an FPGA), a storage resource (such as a memory, and a storage disk), a network resource (such as a network card), and the like. The host 102 and the virtual machine 106 in FIG. 1 are only used to illustrate the present disclosure, but not to specifically limit the present disclosure. The host 102 can set any number of virtual machines as needed.

The environment 100 also includes the SoC 104 that is communicatively coupled with the host 102. SoC refers to the integration of a complete system on a single chip, specifically a system or product formed by combining a plurality of integrated circuits with specific functions on one chip, which includes a complete hardware system and an embedded software carried thereon. For example, an AI accelerator card or various GPUs can be implemented through the SoC 104. In addition to the aforementioned AI accelerator cards and various GPUs, those skilled in the art can implement all suitable systems through the SoCs as required.

The SoC 104 supports a single-root I/O virtualization, which makes the SoC 104 look like a plurality of independent physical devices. Therefore, the SoC 104 supports physical functions (PF) and virtual functions (VF). The physical function is a full-featured peripheral component interconnect high-speed (PCIe) function that supports single-root I/O virtualization. Physical functions are discovered, managed, and configured like normal PCIe devices. Virtual functions are lightweight PCIe functions that are associated with the physical functions. Each virtual function is separated from the physical functions. Virtual functions can be assigned to virtual machines.

The SoC 104 also includes PCIe interfaces. When receiving an access request from the virtual machine 106, it will determine the identity of the virtual function corresponding to the virtual machine 106, an identification of the virtual function corresponding to the virtual machine 106 and a logical address (such as an advanced extensible interface (AXI) address) of the data to be accessed in the memory 112 connected to a memory controller 110 are determined based on the address information in the access request.

The SoC 104 includes a memory management unit 108 and the memory controller 110. The memory management unit 108 is configured to control access to the memory controller 110. The memory management unit 108 may determine a range of storage resources of the memory 112 connected to the memory controller 110 corresponding to the virtual function identification or the virtual machine 106 based on the received virtual function identification.

The memory management unit 108 can also determine whether the received logical address is within the range of the address. If it is within the range of the address, the physical address corresponding to the logical address is accessible. If it is not within the range of the address, an error message is returned.

In some embodiments, the memory management unit 108 includes a register having a memory block table stored therein. The memory block table stores a plurality of items, and each item records a virtual function identification and a range of an actual physical address space corresponding to the virtual function identification. Alternatively or additionally, the storage space of the memory 112 connected to the memory controller 110 is divided into a plurality of blocks, and the block table also stores information on whether the blocks corresponding to the virtual function identification are valid, and the starting number information of the block corresponding to the virtual function and the size of the block, that is, the number of the blocks.

In some embodiments, if the SoC 104 supports four virtual functions and the storage space of the memory 112 connected to the memory controller 110 is 16 GB, each VF may correspond to a 4-GB storage space. Alternatively or additionally, in order to make the virtual machine see a consistent address, the address space seen by each virtual function is 0-4 GB.

The memory controller 110 is configured to store data in the memory 112. The memory 112 connected to the memory controller 110 includes, but is not limited to, a double data rate (DDR) synchronous dynamic random access memory, a random access memory (RAM), a high-bandwidth memory (HBM), an erasable programmable read-only memory (EEPROM), flash memory or other memory technology, or any other non-transmission medium that can be used to store the required information and accessible by the host 102.

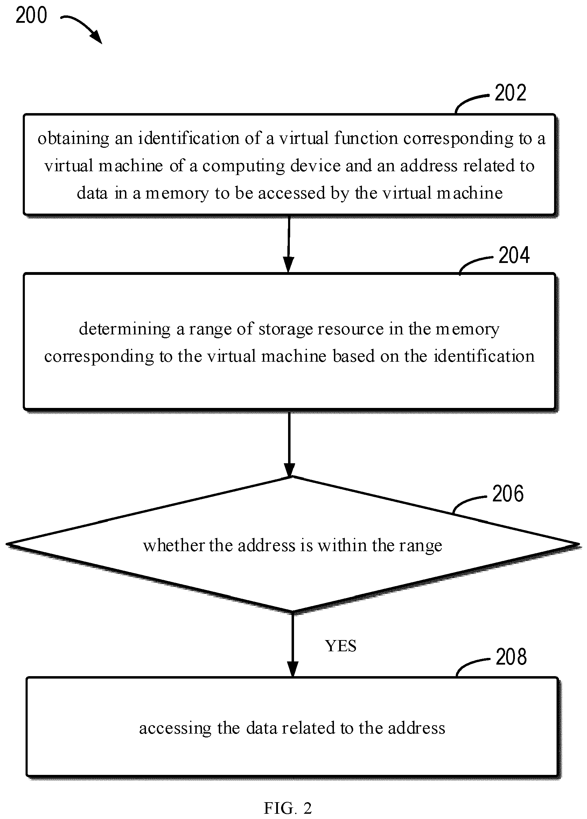

FIG. 1 is a schematic diagram of the example environment 100 for accessing data according to an embodiment of the present disclosure. FIG. 2 is a flowchart of a data accessing method 200 according to an embodiment of the present disclosure.

As illustrated in FIG. 2, at block 202, the memory manager obtains an identification of a virtual function corresponding to a virtual machine of a computing device and an address related to data in a memory to be accessed by the virtual machine, the identification of the virtual function and the address are determined based on an access request received from the virtual machine of the computing device. For example, the SoC 104 in FIG. 1 receives an access request from the virtual machine 106 of the host 102, and the request is used to access data in the memory 112 through the SoC 104. When the interface component of the SoC 104 receives the request, the virtual function identification associated with the virtual machine 106 and the address (such as an advanced extensible interface (AXI) address) of the data to be accessed in the memory 112 are determined based on the request (for example, the address information in the request). The virtual function identification and address are transmitted to the memory management unit 108.

At block 204, the memory management unit determines a range of storage resource in the memory corresponding to the virtual machine based on the identification. For example, the memory management unit 108 in FIG. 1 determines the range of the storage resource in the memory 112 corresponding to the virtual machine 106 based on the identification. Alternatively, or additionally, the memory management unit 108 determines the range of the storage resource corresponding to the identification of the virtual function based on the identification of the virtual function.

In some embodiments, a register is provided in the memory management unit 108, and the register stores the range mapping relation between the virtual function identification and the range of the storage resource of the memory 112 connected to the memory controller 110. Alternatively, or additionally, a memory block table is stored in the register, and the memory block table stores a plurality of entries, and each entry records a virtual function identification and a range of the actual physical address space corresponding to the virtual function identification.

In some embodiments, the memory block table of the register or the above mapping relation can only be modified by the physical function of the SoC 104. When the memory management unit 108 receives a request for setting or modifying a mapping relation between the identification and the range of the storage resource transmitted through a physical function, the mapping relation is stored or modified in the register related to the memory controller 110.

As described above, the memory block table or mapping relation stored in the register only be modified through a physical function, and since the virtual function cannot access the register, so that the memory block table or the mapping relation of the register can only be accessed by the virtual machine manager rather than the virtual machine. In this way, each virtual machine can only access the allocated memory space, and cannot access beyond the boundary, nor can it modify the memory block table, thereby achieving physical isolation of the virtual machine and making access operations safe and reliable.

A block 206, the memory management unit determines whether the address is within the range. For example, in FIG. 1, the memory management unit 108 determines whether the address is within the range.

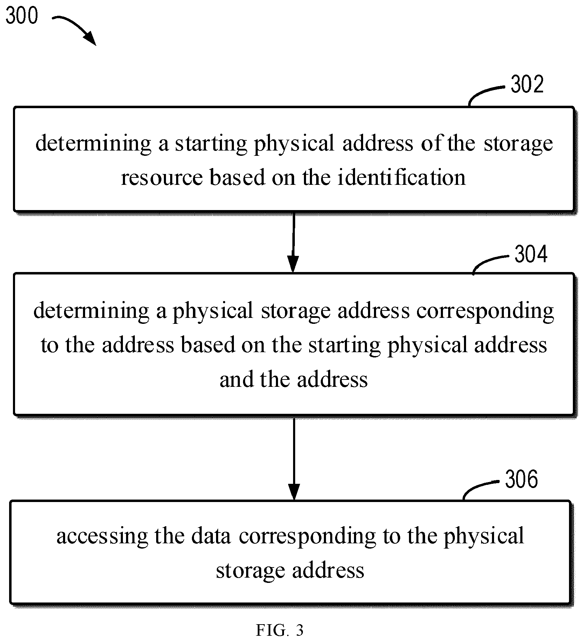

A block 208, in response to determining that the address is within the range, the memory management unit accesses the data related to the address. The data access process is described in detail below with reference to FIG. 3.

If the memory management unit determines that the address is not within the range, an error message is returned. In some embodiments, the error message indicates a decoding error. This operation prevents the virtual machine from accessing storage space that should not be accessed due to misoperations.

By the above method, the virtual machine accesses the memory on the SoC. The memory storage management unit provided on the SoC enables the virtual machine to access the address in the memory, so that only a few hardware resources are required to implement the process, and the software overhead is small, thus the virtualization requirements of a SoC in cloud computing can be achieved.

FIG. 2 is a flowchart of a data accessing method 200 according to an embodiment of the present disclosure. The following describes in detail an exemplary process for accessing address-related data at block 208 in the method 200 with reference to FIG. 3. FIG. 3 is a flowchart of a data accessing method 300 according to an embodiment of the present disclosure.

As illustrated in FIG. 3, at block 302, the memory management unit determines a starting physical address of the storage resource based on the identification. For example, the memory management unit 108 in FIG. 1 may determine the starting physical address of the storage resource corresponding to the virtual machine 106 or the virtual function identification based on the identification of the virtual function.

At block 304, the memory management unit determines a physical storage address corresponding to the address based on the starting physical address and the address. For example, the memory management unit 108 in FIG. 1 determines an actual physical address of data in the memory 112 connected to the memory controller 110 based on the determined physical starting address of the storage resource and the logical address determined based on the access request.

At block 306, the memory management unit accesses the data corresponding to the physical storage address. For example, the memory management unit 110 in FIG. 1 accesses the data in the memory 112 connected to the memory controller 110 based on the obtained actual physical address.

Data accessing is implemented by converting addresses from different virtual machines into physical addresses that are actually accessed, such that access to the memory addresses by different virtual machines are achieved, and does not need to set a corresponding page table for each computing unit, thereby reducing software resource overhead.

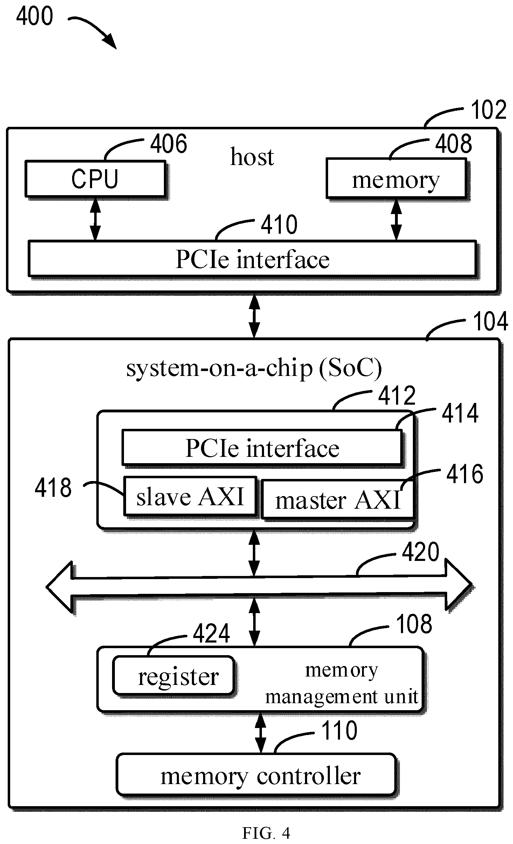

FIG. 4 is a schematic diagram of an example environment 400 for processing data according to an embodiment of the present disclosure. The example environment 400 is a concrete example of the example environment 100 in FIG. 1.

As illustrated in FIG. 4, the host 102, the SoC 104, the memory management unit 108, and the memory controller 110 included in the example environment 400 have been described in detail in FIG. 1, which are not described in detail herein again.

The host 102 further includes a CPU 406 and a memory 408. The CPU 406 is a central processing unit of the host 102 and controls the operation of the virtual machine in the host 102. The memory 408 stores data and programs required to run the virtual machine. The host 102 also includes a PCIe interface 410, which supports a PCIe function. The host 102 is connected to the SoC 104 through a PCIe interface 410.

The SoC 104 also supports the PCIe function and the advanced extensible interface (AXI) protocol and is connected to the host 102 through an interface module 412. The interface module includes a PCIe interface 412, a master AXI interface 416, and a slave AXI interface 418. When receiving the access request sent by the virtual machine from the host 102 through the interface module 412, the interface module 412 determines the virtual function identification and the AXI address corresponding to the virtual machine based on the address information in the access request. The identification of the virtual function and the AXI address are transmitted to the memory management unit 108 through an internal bus 420. A register 424 is provided in the memory management unit 108. The register 424 stores a memory block table. Each entry in the block table stores a virtual function identification number and a range of storage resources of a memory corresponding to the virtual function identification. The memory management unit 108 uses this table to determine whether the received AXI address is out of a range, if not, the actual physical address corresponding to the AXI address is determined based on the address information stored in the register 424.

If the received AXI address is out of the range, an error message is returned, which indicates a decoding error. The memory block table stored in the register 424 can only be modified by a physical function. A virtual machine cannot access the register 424 through a virtual function, which ensures physical isolation of the virtual machine and makes it more safe.

In some embodiments, if the SoC 104 supports a maximum of 4 VFs and the memory 112 has a space of 16 MB, 3 virtual function VFs are actually supported. The space of 16 MB is allocated to the 3 VFs with a ratio of 2:1:1, the starting address is 0xC000_0000, and the block table is:

| Id | Vld | Base | Size | Corresponding address range |
|---|---|---|---|---|
| 0 | 1 | 0 | 4 | 0xC000_0000 ∼ 0xC07F_FFFF |
| 1 | 1 | 4 | 2 | 0xC080_0000 ∼ 0xC0BF_FFFF |
| 2 | 1 | 6 | 2 | 0xC0C0_0000 ∼ 0xC0FF_FFFF |

where, Id indicates the virtual function identification, Vld indicates whether the block is valid, 1 indicates that the block is valid, 0 indicates that the block is invalid; base indicates the starting number of the block, and the value range is 0∼(2^{∗}VF_MAX_NUM-1). Size indicates the size of the block, number of granularity, and the value range is 0∼(2^{∗}VF_MAX_NUM-1), where VF_MAX_NUM represents the maximum number of the supported virtual function VF. In order to improve flexibility, the refined granularity is half of the average value, which is 1/(2^{∗}VF_MAX_NUM), and the granularity is 1/8 (i.e., VF_MAX_NUM = 4).

Shown above is an example in which one physical function corresponds to three virtual functions VF0-VF2. Furthermore, when VF0-VF2 corresponds to the three virtual machines VM0-VM2, VM0 accesses the memory controller 110 through VF0, when VF_id = 0, the legal address of AXI is 0xC000_0000∼0xC07F_FFFF; when VM0 accesses the address 0xC080_0000 through VF0, the main AXI interface 416 outputs VF_id = 0, the address of AXI is 0xC080_0000, and the memory management unit 108 returns an error message when it is detected that the address is out of a range. VM1 accesses the memory controller 110 through VF1, VF_id = 1, and the legal address of AXI is 0xC000_0000 ∼ 0xC03F_FFFF (corresponding to the physical address 0xC080_0000 ∼ 0xC0BF_FFFF); VM2 accesses the memory controller 110 through VF2, VF_id = 2, the legal address of AXI is 0xC000_0000 ∼ 0xC03F_FFFF (corresponding to the physical address 0xC0C0_0000 ∼ 0xC0FF_FFFF), VM2 accesses the address 0xC060_0000, the main AXI interface 416 outputs VF_id=2, the address of AXI is 0xC060_0000, the memory management unit 108 returns an error message when it is detected that the address is out of a range. The virtual machine manager VMM/monitor accesses the register 424 of the memory management unit 108, and its address is 0xFFFF_0020. Then, the main AXI interface 416 outputs PF=1, and the address of AXI is 0xFFFF_0020.

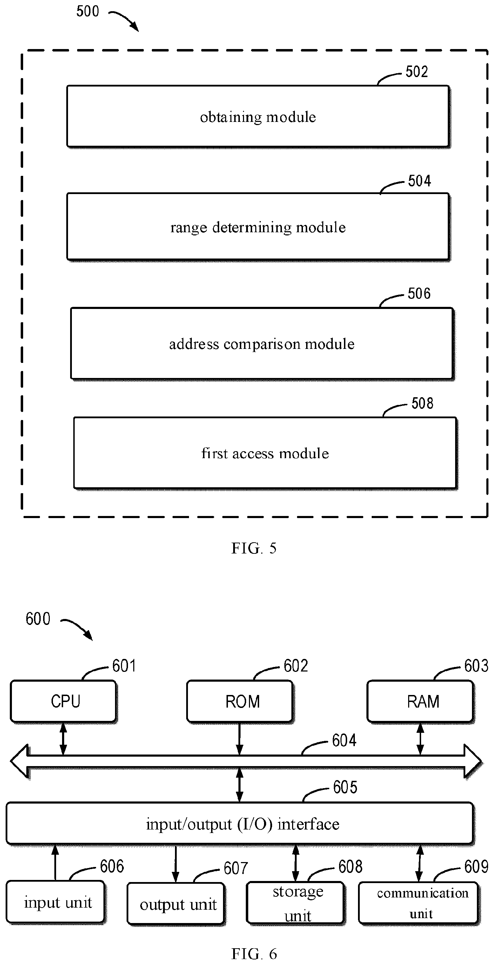

FIG. 5 is a block diagram of a data accessing apparatus 500 according to an embodiment of the present disclosure. The apparatus 500 may be included in or implemented as the memory management unit 108 in FIGs. 1 and 4. As illustrated in FIG. 5, the apparatus 500 includes an obtaining module 502 configured to obtain an identification of a virtual function corresponding to a virtual machine of a computing device and an address related to data in a memory to be accessed by the virtual machine, wherein the identification of the virtual function and the address are determined based on an access request from the virtual machine of the computing device; a range determining module 504 configured to determine a range of storage resource in the memory corresponding to the virtual machine based on the identification; an address comparison module 506 configured to determine whether an address is within the range; and a first access module 508 configured to in response to determining that the address is within the range, access the data related to the address.

In some embodiments, the apparatus 500 includes a returning module, configured to return an error message in response to determining that the address is not within the range.

In some embodiments, the error message indicates a decoding error.

In some embodiments, the first access module 508 includes: a starting physical address determining module, configured to determine a starting physical address of the storage resource based on the identification; a physical storage address determining module, configured to determine a physical storage address corresponding to the address based on the starting physical address and the address; and a second access module, configured to access the data corresponding to the physical storage address.

In some embodiments, the apparatus 500 includes a storage module, configured to store the mapping relation in a register related to the memory in response to receiving a request for setting a mapping relation between the identification and the range of storage resource transmitted through a physical function.

In some embodiments, the apparatus 500 is on a system-on-a-chip (SoC) communicatively coupled with the computing device.

FIG. 6 is a block diagram of a computing device 600 capable of implementing various embodiments of the present disclosure. The device 600 may be used to implement the memory management unit 108 in FIG. 1 and FIG. 4. As shown, the device 600 includes a computing unit 601, which may perform various appropriate actions and processes based on computer program instructions stored in a read-only memory (ROM) 602 or computer program instructions loaded from a storage unit 608 into a random access memory (RAM) 603. In the RAM 603, various programs and data required for the operation of the device 600 can also be stored. The computing unit 601, the ROM 602, and the RAM 603 are connected to each other through a bus 604. An input/output (I/O) interface 605 is also connected to the bus 604.

Components in the device 600 are connected to the I/O interface 605, including: an input unit 606, such as a keyboard, a mouse; an output unit 607, such as various types of displays, speakers; a storage unit 608, such as a disk, an optical disk; and a communication unit 609, such as network cards, modems, wireless communication transceivers, and the like. The communication unit 609 allows the device 600 to exchange information/data with other devices through a computer network such as the Internet and/or various telecommunication networks.

The computing unit 601 may be various general and/or dedicated processing components having processing and computing capabilities. Some examples of the computing unit 601 include, but are not limited to, a central processing unit (CPU), a graphics processing unit (GPU), various dedicated artificial intelligence (AI) computing chips, various computing units running machine learning model algorithms, and digital signal processor (DSP), and any suitable processor, controller, and microcontroller. The computing unit 601 performs various methods and processes described above, such as the methods 200 and 300. For example, in some embodiments, the methods 200 and 300 may be implemented as computer software programs that are tangibly embodied on a machine-readable medium, such as the storage unit 608. In some embodiments, part or all of the computer program may be loaded and/or installed on the device 600 via the ROM 602 and/or the communication unit 609. When a computer program is loaded into the RAM 603 and executed by the computing unit 601, one or more steps of the methods 200 and 300 described above may be performed. Alternatively, in other embodiments, the computing unit 601 may be configured to perform the method 600 in any other suitable manner (e.g., by means of firmware).

The functions described above herein may be performed, at least in part, by one or more hardware logic components. For example, unlimitedly, exemplary types of hardware logic components that may be used include: Field Programmable Gate Arrays (FPGAs), Application Specific Integrated Circuits (ASICs), Application Specific Standard Products (ASSPs), System on Chip (SOCs), Load programmable logic devices (CPLDs) and so on.

Program code for implementing the methods of the present disclosure may be written in any combination of one or more programming languages. These program codes may be provided to a processor or controller of a general computer, a dedicated computer, or other programmable data processing device, such that the program codes, when executed by the processor or controller, cause the functions and/or operations specified in the flowcharts and/or block diagrams is performed. The program code can be executed entirely on the machine, partly on the machine, as a stand-alone software package partly on a machine and partly on a remote machine or entirely on a remote machine or server.

In the context of the present disclosure, a machine-readable medium may be a tangible medium that may contain or store a program for use by or in connection with an instruction execution system, apparatus, or device. The machine-readable medium may be a machine-readable signal medium or a machine-readable storage medium. A machine-readable medium may include, but is not limited to, an electronic, magnetic, optical, electromagnetic, infrared, or semiconductor system, apparatus, or device, or any suitable combination of the foregoing. More specific examples of machine-readable storage media include electrical connections based on one or more wires, portable computer disks, hard disks, random access memories (RAM), read-only memories (ROM), erasable programmable read-only memories (EPROM or flash memory), fiber optics, compact disc read-only memories (CD-ROM), optical storage devices, magnetic storage devices, or any suitable combination of the foregoing.

Furthermore, although the operations are depicted in a particular order, this should be understood as requiring that such operations be performed in the shown particular order or in sequential order, or that all illustrated operations be performed to achieve the desired result. Under certain circumstances, multitasking and parallel processing may be advantageous. Likewise, although several specific implementation details are included in the discussion above, these should not be construed as limiting the scope of the disclosure. Certain features that are described in the context of separate embodiments can also be implemented in combination in a single implementation. Conversely, various features that are described in the context of a single implementation can also be implemented in multiple implementations individually or in any suitable sub-combination.

Although the subject matter has been described in language specific to structural features and/or methodological acts, it is to be understood that the subject matter defined in the appended claims is not necessarily limited to the specific features or acts described above. Rather, the specific features and acts described above are merely example forms for implementing the claims.

## Claims

1. A data accessing method, comprising:
obtaining (202) an identification of a virtual function corresponding to a virtual machine of a computing device and an address related to data in a memory to be accessed by the virtual machine, wherein the identification of the virtual function and the address are determined based on an access request received from the virtual machine of the computing device;
determining (204) a range of storage resource in the memory corresponding to the virtual machine based on the identification;
determining (206) whether the address is within the range; and
in response to determining that the address is within the range, accessing (208) the data related to the address.

2. The method according to claim 1, further comprising:
in response to determining that the address is not within the range, returning an error message.

3. The method according to claim 2, wherein the error message indicates a decoding error.

4. The method according to one of claims 1 to 3, wherein accessing (208) the data related to the address comprises:
determining (302) a starting physical address of the storage resource based on the identification;
determining (304) a physical storage address corresponding to the address based on the starting physical address and the address; and
accessing (306) the data corresponding to the physical storage address.

5. The method according to one of claims 1 to 4, further comprising:in response to receiving a request for setting a mapping relation between the identification and the range of the storage resource transmitted through a physical function, storing the mapping relation in a register related to the memory.

6. The method according to claim 1, wherein the method is implemented on a system-on-a-chip (SoC) communicatively coupled with the computing device.

7. A data accessing apparatus (500), comprising:
an obtaining module (502), configured to obtain an identification of a virtual function corresponding to a virtual machine of a computing device and an address related to data in a memory to be accessed by the virtual machine, wherein the identification of the virtual function and the address are determined based on an access request from the virtual machine of the computing device;
a range determining module (504), configured to determine a range of storage resource in the memory corresponding to the virtual machine based on the identification;
an address comparison module (506), configured to determine whether the address is within the range; and
a first access module (508), configured to in response to determining that the address is within the range, access the data related to the address.

8. The apparatus (500) according to claim 7, further comprising:
a returning module, configured to return an error message in response to determining that the address is not within the range.

9. The apparatus (500) according to claim 8, wherein the error message indicates a decoding error.

10. The apparatus (500) according to one of claims 7 to 9, wherein the first access module (508) comprises:
a starting physical address determining module, configured to determine a starting physical address of the storage resource based on the identification;
a physical storage address determining module, configured to determine a physical storage address corresponding to the address based on the starting physical address and the address; and
a second access module, configured to access the data corresponding to the physical storage address.

11. The apparatus (500) according to one of claims 7 to 10, further comprising:
a storage module, configured to store the mapping relation in a register related to the memory in response to receiving a request for setting a mapping relation between the identification and the range of storage resource transmitted through a physical function.

12. The apparatus (500) according to one of claims 7 to 11, wherein the apparatus (500) is on a system-on-a-chip (SoC) communicatively coupled with the computing device.

13. An electronic device, comprises:
one or more processors; and
a storage device for storing one or more programs, wherein when the one or more programs are executed by the one or more processors, the one or more processors are caused to implement the method according to any one of claims 1-6.

14. A computer-readable storage medium having a computer program stored thereon that, when executed by a processor, the method according to any one of claims 1-6 is implemented.
